# EUROPEAN PATENT SPECIFICATION

(11) **EP 0 749 062 B1**
(45) Date of publication and mention of the grant of the patent: **22.08.2001**
(21) Application number: 96109254.1
(22) Date of filing: 10.06.1996
(51) Int. Cl.: G06F 1/16, B41J 5/10, G06F 3/02, G06K 11/18

(54) **Keyboard for the inputting of data having a tracking device**
Tastatur zur Dateneingabe mit einer Nachführvorrichtung
Clavier d'entrée de données muni d'un dispositif de poursuite

(30) Priority: 14.06.1995 IT TO950137 U
(43) Date of publication of application: 18.12.1996
(73) Proprietor: Ing. C. Olivetti & C., S.p.A., 10015 Ivrea (Torino) (IT)
(72) Inventor: Viletto, Giacomo, 10030 Maglione (TO) (IT); Rodriguez, Pierangelo, 10015 Ivrea (TO) (IT)
(74) Representative: Casuccio, Carlo

(56) References cited:
- EP-A- 0 477 098
- WO-A-92/14231
- DE-A- 4 135 926
- DE-A- 4 212 976
- US-A- 5 208 736
- US-A- 5 278 779

## Description

### BACKGROUND OF THE INVENTION

This invention concerns a keyboard for the inputting of data in an electronic equipment, comprising an upper surface on which a plurality of keys is mounted, a rear side, two lateral sides which define two comers with the rear side, a tracking device arranged on the upper surface and suitable for positioning a track on a screen of the electronic equipment, and an actuating pushbutton associated with the tracking device.

Keyboards of the type indicated above are known, in which the tracking device and associated actuating pushbuttons are particularly convenient to use only when the keyboard is resting stably on a fixed plane of a desk, but in which the tracking device and pushbuttons become difficult to operate when the keyboard is removed from the fixed surface and, by gripping it through its lateral sides, the keyboard is held in the hand, or is resting on the operator's lap. The latter two positions are actuated particularly when operating with keyboards that are part of multimedia systems or similar equipment, and especially with keyboards of the type known generally as "cordless" and suitable for transmitting data to the multimedia system by means of infrared rays. Not having any cables providing connection to the equipment the data have to be transmitted to, the cordless keyboards allow considerable possibilities of movement with respect to the equipment.

From patent document US 5,208,736 it is known a desktop computer having a keyboard which incorporates a pointing device including a trackball and associated select buttons. This trackball is embedded in the comer of the keyboard, with the select buttons arranged on the opposite side of the keyboard behind the trackball. However also this arrangement appears as not being completely optimal for operating the select buttons by means of a user's fingers, when the keyboard is held by hand not on a fixed plane.

### SUMMARY OF THE INVENTION

The purpose of this invention is that of eliminating the disadvantages described above and of providing easy, convenient actuation of the tracking device and its actuating pushbuttons, even when the keyboard is not laid on a fixed surface. This purpose is achieved by the keyboard of the invention, which is characterised by the fact that the pushbutton of the tracking device is arranged on, or in the proximity of, one of the comers defined by the rear side and the lateral sides of the keyboard, either on the rear side or on the corresponding lateral side, and moreover that this pushbutton is adjacent to the tracking device, and can thus be reached and operated by the fingers of one hand of the operator, who grips the lateral side corresponding to this comer and activates the tracking device.

According to one aspect of this invention, a lower recess is provided between the lateral sides of the keyboard, and defines two lateral grips for the operator.

### BRIEF DESCRIPTION OF THE DRAWINGS

These and other characteristics of this invention will become apparent by the following description, provided by way of a non-exhaustive example, in conjunction with the accompanying drawings, in which:
Fig. 1 is a prospective view of the rear right of the keyboard according to this utility model;
Fig. 2 is a rear view of the keyboard of Fig. 1; and
Fig. 3 is a lateral view of the keyboard of Fig. 1.

### DETAILED DESCRIPTION OF THE PREFERRED EMBODIMENT

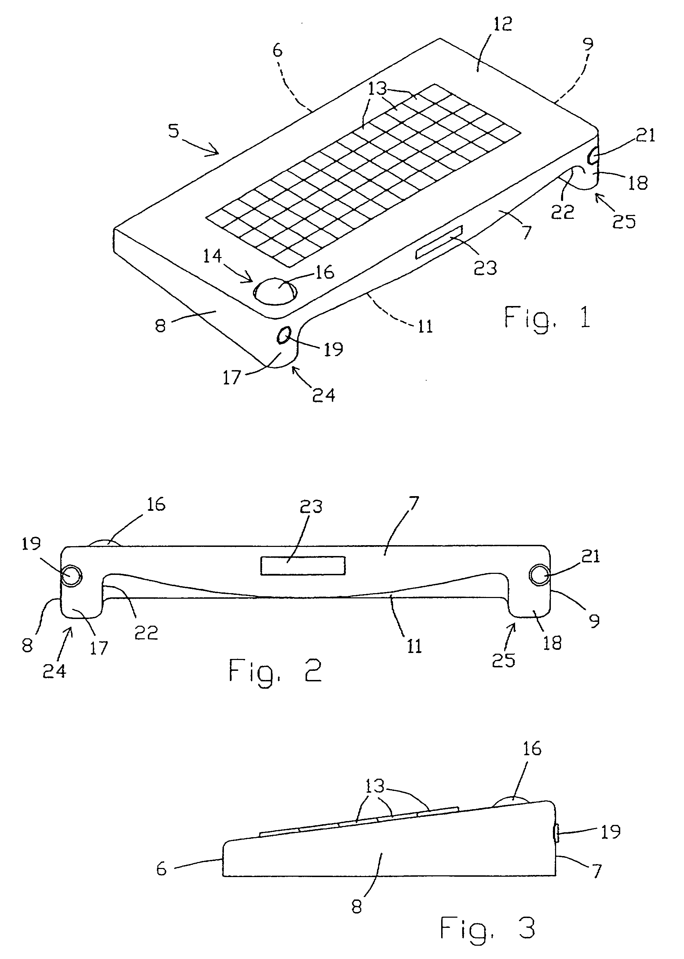

With reference to Fig. 1, a keyboard 5 comprises a front side 6 facing an operator of the keyboard 5, a rear side 7 opposite the front side 6, two lateral sides 8 and 9, a lower surface 11 and an upper surface 12 on which is mounted a plurality of keys 13 for the inputting of data. A tracking device 14 is mounted on the upper surface 12 and is provided with a rolling ball 16, which is capable of causing a cursor to move on a screen of electronic equipment, such as for example a computer linked to the keyboard 5 and not shown in the drawings.

The two sides 8 and 9, with rear side 7, define two comers 17 and 18, respectively. According to one characteristic of the invention, on comers 17 and 18 are arranged two respective pushbuttons 19 and 21, in working association with tracking device 14 for controlling the cursor on the screen.

Sides 8 and 9 protrude downwards over their entire length with respect to the lower surface 11, forming two lateral grips 24 and 25, allowing the operator to grip the keyboard 5 with both hands, instead of keeping it on a fixed surface. Provided between the grips 24 and 25 is a recess, so shaped about the lower surface as to comprise a curved surface for improved disposition of the keyboard 5 on the operator's lap.

The keyboard of the invention is particularly suited for use in multimedia systems, in which the keyboard often has to be held in the operator's hand, and not placed on a fixed work surface, and in which data are transmitted between the keyboard and the equipment of the multimedia systems without wires, for example by means of infrared rays. To permit this cordless transmission, an infrared ray receiver/transmitter unit is mounted in a central portion 23 of rear side 7.

Each pushbutton 19 and 21 can be reached by the fingers of one hand of the operator when this hand grips the corresponding lateral side 8 and 9, adjacent to respective comer 17 and 18. Further, pushbutton 19 and ball 16 can be reached respectively by the thumb and another finger of the same hand as grips side 8.

It is obvious that, without departing from the substance of this invention, pushbuttons 19 and 21 may be arranged in the vicinity of respective corner 17 and 18, either on rear side 7 or on the corresponding lateral sides 8 and 9, provided that pushbuttons 19 and 21 can still be reached by the fingers of the hands of the operator engaging with respective sides 8 and 9.

It remains understood that various changes, improvements or additions may be made to the keyboard described up to now, without exiting from the scope of this invention, which is defined by the claims.

## Claims

1. A keyboard (5) for the inputting of data in an electronic equipment, comprising an upper surface (12) on which a plurality of keys (13) is mounted, a rear side (7), two lateral sides (8, 9) which define two corners (17, 18) with said rear side (7), a tracking device (14) arranged on said upper surface (12) and suitable for positioning a track on a screen of said electronic equipment, and an actuating pushbutton (19) associated with said tracking device (14), characterised in that said pushbutton (19) is arranged on one (17) of said comers, or in proximity thereof, either on the rear side (7) or on the corresponding lateral side (8), adjacent to said tracking device (14), so as to be reached and operated by the fingers of the hand of an operator gripping the lateral side (8) corresponding to said comer (17) and operating on said tracking device (14).

2. A keyboard according to claim 1, characterised in that cordless transmission means are provided to transmit said data to said electronic equipment.

3. A keyboard according to claim 2, characterised in that said transmission means comprise an infrared receiver/transmitter unit (23).

4. A keyboard according to claim 3, characterised in that said receiver/transmitter unit (23) is mounted on said rear side (7).

5. A keyboard according to claim 1, characterised in that a lower recess (22) is provided between said lateral sides (8, 9), so as to define two lateral grips (24, 25) for being gripped by the keyboard operator.

6. A keyboard according to claim 5, characterised in that said lateral grips (24, 25) have substantially the same length as said lateral sides (8, 9) and that said recess (22) is shaped so as to comprise a curved surface arranged between said lateral grips (24, 25) to improve disposition of the keyboard (5) on the operator's lap.

## Patentansprüche

1. Tastatur (5) zur Eingabe von Daten in ein elektronisches Gerät, bestehend aus einer Oberseite (12), auf der mehrere Tasten (13) befestigt sind, einer Rückseite (7), zwei Schenkeln (8, 9), die zwei Ecken (17, 18) mit der Rückseite (7) bilden, einer Positioniereinrichtung (14), die auf der Oberseite (12) angeordnet ist und die Positionierung einer Markierung auf einem Bildschirm des elektronischen Geräts ermöglicht, und einer Einstelldrucktaste (19), die der Positioniereinrichtung (14) zugeordnet ist,
**dadurch gekennzeichnet, daß**
die Drucktaste (19) an einer (17) der Ecken oder in deren Nähe auf der Rückseite (7) oder an dem entsprechenden Schenkel (8) nahe der Positioniereinrichtung (14) angeordnet ist, so daß sie von den Fingern der Hand eines Bedieners, der den Schenkel (8) erfaßt, der der Ecke (17) entspricht, und die Positioniereinrichtung (14) betätigt, erreicht und betätigt werden kann.

2. Tastatur nach Anspruch 1,
**dadurch gekennzeichnet**, **daß**
Schnurlosübertragungseinrichtungen vorgesehen sind, um die Daten zum elektronischen Gerät zu übertragen.

3. Tastatur nach Anspruch 2,
**dadurch gekennzeichnet, daß**
die Übertragungseinrichtungen eine Infragrot-Sende/Empfangseinheit (23) umfassen.

4. Tastatur nach Anspruch 3,
**dadurch gekennzeichnet, daß**
die Sende/Empfangseinheit (23) auf der Rückseite (7) angeordnet ist.

5. Tastatur nach Anspruch 1,
**dadurch gekennzeichnet, daß**
eine untere Ausnehmung (22) zwischen den Schenkeln (8, 9) vorgesehen ist, um zwei seitliche Griffe (24, 25) zu bilden, die von dem Bediener der Tastatur erfaßt werden können.

6. Tastatur nach Anspruch 5,
**dadurch gekennzeichnet, daß**
die seitlichen Griffe (24, 25) im wesentlichen die gleiche Länge wie die Schenkel (8, 9) haben, und daß die Ausnehmung (22) so geformt ist, daß sie eine gekrümmte Fläche hat, die zwischen den seitlichen Griffen (24, 25) angeordnet ist, um die Positionierung der Tastatur (5) auf dem Schoß des Bedieners zu verbessern.

## Revendications

1. Clavier (5) pour entrer des données dans un équipement électronique, comprenant une surface supérieure (12) sur laquelle est montée une pluralité de touches (13), un côté arrière (7), deux côtés latéraux (8, 9) qui définissent deux angles (17, 18) avec ledit côté arrière (7), un dispositif de poursuite (14) disposé sur ladite surface supérieure (12) et approprié pour positionner une trajectoire sur un écran dudit équipement électronique, et un bouton-poussoir d'actionnement (19) associé audit dispositif de poursuite (14), caractérisé en ce que ledit bouton-poussoir (19) est disposé sur l'un (17) desdits angles, ou à proximité de celui-ci, soit sur le côté arrière (7), soit sur le côté latéral correspondant (8), au voisinage dudit dispositif de poursuite (14), afin qu'un opérateur saisissant le côté latéral (8) correspondant audit angle (17) et faisant fonctionner ledit dispositif de poursuite (14) puisse l'atteindre et l'actionner par les doigts de sa main.

2. Clavier selon la revendication 1, caractérisé en ce qu'un moyen de transmission sans fil est prévu pour transmettre lesdites données audit équipement électronique.

3. Clavier selon la revendication 2, caractérisé en ce que ledit moyen de transmission comprend une unité formant émetteur-récepteur infrarouge (23).

4. Clavier selon la revendication 3, caractérisé en ce que l'unité formant émetteur-récepteur (23) est montée sur le côté arrière (7).

5. Clavier selon la revendication 1, caractérisé en ce qu'un évidement inférieur (22) est prévu entre lesdits côtés latéraux (8, 9), de façon à définir deux poignées latérales (24, 25) destinées à être saisies par l'opérateur du clavier.

6. Clavier selon la revendication 5, caractérisé en ce que lesdites poignées latérales (24, 25) ont sensiblement la même longueur que lesdits côtés latéraux (8, 9) et en ce que ledit évidement (22) est formé de façon à comprendre une surface courbe disposée entre lesdites poignées latérales (24, 25), afin d'améliorer la disposition du clavier (5) sur les genoux de l'opérateur.
